(19) Europäisches Patentamt
European Patent Office
Office européen des brevets

(11) EP 0 987 222 A2

(12) # EUROPEAN PATENT APPLICATION

(43) Date of publication:
**22.03.2000 Bulletin 2000/12**

(51) Int. Cl.[7]: **C02F 1/46**

(21) Application number: **98310663.4**

(22) Date of filing: **23.12.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **25.08.1998 JP 23893498**

(71) Applicants:
- **Riverstone Co. Ltd.**
  **Yokohama-Shi, Kanagawa-Ken 240-0045 (JP)**
- **Matsuo, Yoshiaki**
  **Tokyo 143-0011 (JP)**
- **Hanaoka, Kohkichi**
  **Nagano-Ken 386-0001 (JP)**

(72) Inventors:
- **Matsuo, Yoshiaki**
  **Ohta-Ku, Tokyo 143-0011 (JP)**
- **Hanaoka, Kohkichi**
  **Nagano-Ken 386-0001 (JP)**

(74) Representative:
**Rees, David Christopher et al**
**Kilburn & Strode**
**20 Red Lion Street**
**London WC1R 4PJ (GB)**

(54) **Electrolyzed aqueous solution containing water for injection**

(57) This invention relates to the water for injection incorporating therein an electrolyzed aqueous solution containing excess free hydroxyl ions and dissolved hydrogen and relates more particularly to the water for injection incorporating therein the cathode side electrolyzed aqueous solution obtained by forming excess free hydroxyl ions and dissolved hydrogen on the cathode side, removing the electrolytic ions other than the ions aimed at as by a process of distillation or a process of reverse osmosis, and sterilizing the remaining ions.

Further, this invention relates to a method for measuring the amount of excess free hydroxyl ions, characterized by neutralizing the excess free hydroxyl ions with ascorbic acid and then determining the ability to eliminate superoxide radicals by the method of electron spin resonance.



Printed by Xerox (UK) Business Services
2.16.7/3.6

## Description

This invention relates to the water for injection incorporating therein an electrolyzed aqueous solution containing excess free hydroxyl ions and dissolved hydrogen and relates more particularly to the water for injection incorporating therein the cathode side electrolyzed aqueous solution obtained by forming excess free hydroxyl ions and dissolved hydrogen on the cathode side, removing the electrolytic ions other than the ions aimed at as by a process of distillation or a process of reverse osmosis, and sterilizing the remaining ions.

This invention further relates to a free hydrogen ion-containing water obtained by the reaction of the excess free hydroxyl ion-containing water with a reducing substance.

Further, this invention relates to a method for measuring the amount of excess free hydroxyl ions, characterized by neutralizing the excess free hydroxyl ions with ascorbic acid and then determining the ability to eliminate superoxide radicals by the method of electron spin resonance.

The electrolysis of water has been heretofore effected by the use of such an electrolyte as sodium chloride or potassium chloride. The electrolysis of water by the use of such a supporting electrolyte as sulfuric acid which does not actually participate in the reaction has been also in vogue. Where a halogenide is used as the electrolyte as in the former case, the electrolyte undergoes electrolytic dissociation perfectly because the relevant ionic dissociation is thoroughly carried out. Owing to this electrolytic dissociation, the anions are diffused and migrated toward the anode and the cations toward the cathode in the aqueous electrolyte solution during the course of the electrolysis, namely the electrically charged ions are fated to be moved in the aqueous solution. When NaCl, for example, is used as the electrolyte, therefore, the following reactions occur at the cathode and the anode.

To begin with, at the anode, a halogen element such as, for example, chlorine ions emit electrons and consequently induce conversion of chlorine atoms into chlorine molecules. Then, the water molecules at the anode emit electrons and form hydrogen ions and oxygen molecules and react with the chlorine ions which have been diffused and migrated from the cathode and consequently form hydrochloric acid. When the hydrochloric acid is produced, the pH level is lowered and the chlorine gas is partly converted into hypochlorous acid. As a result, the aqueous solution is acidified by the hydrochloric acid and the hypochlorous acid on the anode side. At this time, the chlorine gas and the oxygen gas maintain a gas-liquid equilibrium under fixed partial pressures thereof.

Meanwhile, at the cathode, the sodium ions of an alkalin metal and the hydroxyl ions in the electrolyte jointly form sodium hydroxide and, at the same time, the electrolysis of water results in reducing the water molecules and consequently forming hydrogen molecules and hydroxyl ions. As a result, the aqueous solution on the cathode side is caused to manifest alkalinity by dint of the sodium hydroxide. The water molecules on the surface of the cathode, when hydrolyzed, are reduced to form hydrogen gas. Since the electrolyzed aqueous solution on the cathode side contains hydrogen gas copiously, therefore, the oxygen-reduction potential is lowered even to -300 mV in an extreme case by reason of the ratio of the concentration of the hydrogen gas to that of the water. Incidentally, when sodium chloride is used as the electrolyte, it is caused by electrolysis to form sodium hydroxide. The hydroxyl ions which are contained in this sodium hydroxide account for such an amount that they may react with sodium ions at a ratio of 1 : 1. Since the electrolysis forms hydroxyl ions anew, the present invention occasionally refers to the free hydroxyl ions newly formed by the electrolysis as "excess free hydroxyl ions" for the sake of discriminating them from the hydroxyl ions inherently contained in the sodium hydroxide.

As a result of the electrolysis which proceeds as described above, the anode side is destined to manifest acidity and the cathode side alkalinity.

When an electrically charged membrane such as, for example, a cation-exchange membrane is used as the diaphragm, the cations in the aqueous electrolyte solution are exclusively migrated from the anode side to the cathode side. When an anion-exchange membrane is used, the anions in the aqueous electrolyte solution are exclusively migrated from the cathode side to the anode side.

The utilization of the electrolyzed aqueous solution in vital organisms has been already known since early times. When sodium chloride is used as the electrolyte, the hypochlorous acid which is formed at the anode is endowed with a powerful fungicidal activity and, therefore, has found utility as an alternative disinfectant. It has been also known already that the electrolysis mentioned above forms hydroxyl radicals on the anode side. A theory holds that the hydroxyl radicals, when used directly in a vital organism, exalt the immunizing function of the organism by exerting an effect of some sort on the protecting mechanism of the organism. As regards the utilization of the cathode side of the electrolytic apparatus, by electrolyzing the tap water in the apparatus and using the water electrolyzedon the cathode side as an internal medicine, the medicine finds extensive utility in patients with gastrointestinal trouble because it is capable of suppressing abnormal gastrointestinal fermentation and curbing excretion of stomach acids.

The alkaline water electrolyzed on the cathode side contains alkali metal ions and excess hydroxyl ions and, where the alkali metal happens to be calcium, these ions are dissolved as calcium hydroxide in water. The electrolyzed aqueous solution on the cathode side copiously contains hydrogen gas and exhibits a low oxidation-reduction potential as described above. The substances responsible for the manifestation of such a reducing property include L-ascorbic

acid and sodium ascorbate, for example. The former compound has hydroxyl groups at the 3 and the 2 position thereof and the latter compound has a hydroxyl group at the 2 position thereof. It is also known widely that the reducing substance reacts with an alkali and the product of the reaction of such a reducing substance as ascorbic acid with the alkali is useful as a scavenger for free radicals.

One use found for water is as the injection water in the form of a water-soluble injection solvent. At present, the water which is obtained preparatorily as purified water by distilling ordinary water or refined water or superfiltering refined water and then finished by sterilizing the purified water is in use.

Generally, the electrolytic apparatus is designed for direct connection to the water system with a view to permitting use of the electrolyzed aqueous solution. Most electrolytic apparatuses are adapted to permit collection of the electrolyzed aqueous solution from both the cathode side and the anode side by a simple procedure. In this case, for the purpose of indicating the properties of the electrolyzed liquid, the oxidation-reduction potential and the hydrogen ion concentration of the aqueous solution are utilized more often than not as indexes. Particularly, the water electrolyzed on the cathode side is known to have the hydroxide of an alkali metal and the hydrogen gas as the components of the composition thereof as described above. As the indexes for the composition, the oxidation-reduction potential and the hydrogen ion concentration are adopted. In the case of the water electrolyzed on the cathode side, even when the oxidation-reduction potential is used as the index of reducing property, since the oxidation-reduction potential in the solution is to be decided by the relative concentrations of the hydrogen gas and the water and the hydrogen ion concentration in accordance with the Nernst equation, it does not necessarily serve as the index of actual reducing property of the water hydrolytically formed on the cathode side.

Generally, the water electrolyzed on the cathode side, when the electrolysis occurs strongly, has the ion concentration thereof increased even beyond pH 11. Then, the electrolyzed aqueous solution mentioned above is unfit for use because it cannot be directly ingested into the vital organism.

The excess free hydroxyl ions and the hydrogen gas formed on the cathode side cannot all by themselves serve as a scavenger for eliminating superoxide anion radicals which are free radicals.

The water electrolyzed on the anode side is known to have such an acid as hydrochloric acid, oxygen gas, and hypochlorous acid as components of the composition thereof. It is self-evident that the hypochlorous acid discharges a role in the action of fungicidal disinfection. These components of the composition do not easily account for such phenomena as the promotion of granulation. Logical explanation of the phenomena necessitates discovery of the presence of an independent system fit for therapy.

Further in the vital organism, the mitochondria in the cells reduces oxygen electrons and allows the reaction to proceed continuously from the stage of superoxide anion radicals resulting from the unielectron reduction of oxygen through the step of $H_2O$ resulting from the reduction of four electrons, with hydrogen ions and hydroxyl ions consumed during the process. In these species of ions, the hydroxyl ions are held to participate in the operation of a system for the transmission of electrons. In the electrolysis, however, the oxidation-reduction potential of the water electrolyzed on the cathode side cannot be easily computed solely in accordance with the Nernst equation.

This invention has been conceived in the light of the true state of prior art described above. It aims to electrolyze an aqueous electrolyte solution by the use of inert electrodes to form free ions on the two electrode sides, specifically free hydroxyl ions and hydrogen molecules at the cathode and free hydrogen ions and oxygen molecules at the anode. It also aims to provide a method for producing the water which is made to contain excess free hydroxyl ions by subjecting to the process of distillation, the process of reverse osmosis, or the combination thereof the water electrolyzed on the cathode side particularly by the neutralization titration or the ionic determination of hydroxyl ions forming an alkali and hydrogen ions forming an acid in accordance with the Faraday's rule. Though the excess free hydrogen ions in water assume the molecular structure of oxonium ions, $H_3O^+$, the present invention describes them as hydrogen ions for the sake of convenience.

Generally, such an electrolyte as sodium chloride, when dissolved in water, forms sodium ions as cations and chlorine ions as anions. When the concentration of the aqueous solution is about 0.1 mol, the two species of ions equal in concentration because the electrolyte is completely dissociated and, at the same time, allowed to approximate the activity coefficient thereof closely to 1. Likewise, in the case of sodium hydroxide or hydrochloric acid as an electrolyte, the cations and the anions equal in concentration and the former ions react with an acid and the latter ions with a base. In this case, however, the free hydroxyl ions or the free hydrogen ions avoid reacting with an acid or a base and barely the formation of free ions of opposite signs or the substitution reaction thereof is allowed to occur. Thus, this invention permits provision of a method for the production of a water containing extremely stable excess free hydroxyl ions.

This invention also resides in providing the water for injection which is made to contain excess free hydroxyl ions and hydrogen (hereinafter referred to occasionally as "dissolved hydrogen") by electrolyzing with inert electrodes a dilute aqueous electrolyte solution obtained by dissolving the electrolyte in refined water thereby forming free hydroxyl ions and hydrogen molecules on the cathode side and subjecting to the process of distillation or the process of reverse osmosis the water electrolyzed on the cathode side particularly by the neutralization titration or ionic determination of the hydroxyl ions forming an alkali and hydrogen ions forming an acid in accordance with the Faraday's rule.

Generally, such an electrolyte as sodium chloride dissolves in water and forms sodium ions as cations and chlorine ions as anions. When the concentration of the aqueous solution is about 0.1 mol, the two species of ions equal in concentration because the electrolyte is completely dissociated and, at the same time, allowed to approximate the activity coefficient thereof closely to 1. In the case of sodium hydroxide or hydrochloric acid as an electrolyte, the free hydroxyl ions or the free hydrogen ions avoid reacting with an acid or a base and barely the formation of free ions of opposite signs or the substitution reaction thereof is allowed to occur. Thus, this invention permits provision of the water for injection which contains extremely stable excess free hydroxyl ions and dissolved hydrogen.

The invention may be carried into practice in various ways and some embodiments will now be described by way of example with reference to the accompanying drawings in which:-

Fig. 1 is a diagram to aid in the explanation of the construction of an electrolytic apparatus which is capable of producing an excess free hydroxyl ion-containing water of this invention.
Fig. 2 is a diagram illustrating a method for the determination of excess free hydroxyl ions in the water electrolyzed on the cathode side by the flow process.
Fig. 3 is a graph resulting from plotting the amounts of excess free hydroxyl ions obtained therein.
Fig. 4 shows the results of an experiment carried out by preparing in the course of the electrolysis by the flow process an electrolyzed aqueous solution with the electric current of such a magnitude as forms excess free hydroxyl ions in the largest amount and testing this water for ability to effect superoxide dismutation of L-ascorbic acid, quercetin, and catechin.
Fig. 5 shows the results of an experiment carried out by preparing a water electrolyzed on the cathode side, the liquid obtained by boiling the water, and an aqueous electrolyte solution ready for electrolysis and testing these liquids for ability to eliminate hydrogen peroxide.

(1) Excess free hydroxyl ion water and method for production of excess free hydroxyl ion-containing water

Now, the electrolyzed aqueous solution containing excess free hydroxyl ions will be described below. The excess free hydroxyl ion water and the excess free hydroxyl ion-containing water can be produced by using platinum electrodes as inert electrodes, using sodium chloride as an electrolyte, and inducing electrolytic formation of free ions at the cathode. The excess free hydroxyl ion water is the product obtained by removing the electrolyte from the excess free hydroxyl ion-containing water of this invention. One mode of embodying the method for the production of the excess free hydroxyl ion-containing water will be shown below.

The electrolyzed aqueous solution containing excess free ions (excess free hydroxyl ion-containing water) is produced by first performing electrolysis by the use of such an electrolytic cell 1 as illustrated in Fig. 1. An aqueous electrolyte solution 6 enters the electrolytic cell 1 via an inlet 6a, passes through the spaces separating a cathode 2, an anode 3, and a diaphragm 4, converts into an electrolyzed aqueous solution on the cathode and anode sides 7 and 8, and flows out respectively via a cathode side outlet 7a and an anode side outlet 8a. The cathode 2 and the anode 3 are both formed of an inert electrode. Platinum is used for the inert electrode, sodium chloride is used as the electrolyte for the aqueous electrolyte solution 6, and the voltage from a DC power source 5 is applied between the cathode 2 and the anode 3 to induce electrolytic formation of free ions at the two electrodes mentioned above. An electrolyzed aqueous solution(excess free hydroxyl ion-containing water) 7 is then distilled in a distillation device to remove the electrolyte and produce the excess free hydroxyl ion-containing water aimed at by this invention.

The electrolyte to be used herein does not need to be particularly discriminated so long as it is a water-soluble salt. It is, however, preferred to be the salt of an alkali metal or an alkaline earth metal. As the electrolyte, potassium chloride or calcium chloride and magnesium chloride which are divalent-monovalent electrolytes can be used besides sodium chloride which is a monovalent-monovalent electrolyte. Futher sulfuric acid being supporting electrode can be used. Specifically, with consideration for the subsequent removal of the electrolyte from the electrolyzed aqueous solution and for the purpose of using the electrolyzed aqueous solution as potable water or by injection, the electrolyte to be used is preferred to be NaCl or KCl and the like. Among them, NaCl is preferred because of having extremely safety and electrolytic efficiency.

Though the inert electrode may be made of any of the platinum type substances, it has an absolute condition to fulfill that it be an irreversible electrode. If the inert electrode is a reversible electrode, then it will directly participate in a chemical reaction and will not be enabled to devote itself wholly to the transmission and reception of electrons. As a result, the electrolyzed aqueous solution which is consequently obtained will possibly suffer the composition thereof to vary. Specifically, other substances than platinum which are usable at all for the inert electrode include titanium and stainless steel, for example. In all the electrodes which are made of these substances, the platinum electrode proves most favorable because it shows a very strong ionization tendency and enjoys extreme stability as an electrode. The concentration of the electrolyte in the aqueous electrolyte solution is preferred to fall in the range of from $10^{-4}$ mol/lit. through the state of saturation, more favorably in the range of from $1/10^{-2}$ - $10^{-4}$ mol/lit. This is on a par with the concentration of ions in the tap water for practical use. Incidentally, the amount of ions to be formed by electrolysis varies with the distance between the electrodes. The distance between the electrodes, therefore, is preferred to fall in the range of 1 - 5 mm, more favorably 1 - 2 mm. The amount of ions to be formed also varies with the surface condition of the electrodes. The electrodes, therefore, are preferred to have as large a surface area as permissible. This surface area is preferred to be on a par with the surface area of the diaphragm. Another condition imposed on the electrodes is that the electrodes possess a smooth embossed surface.

For the diaphragm 4, either of an anion-exchange membrane and a cation-exchange membrane may be adopted. A neutral membrane which is a non-charged membrane may be adopted for the diaphragm. Since a charged membrane can be endowed with improved ion selectivity, the charged membrane is preferred over the neutral membrane. The neutral membrane is tolerable when the pores formed in the wall thereof have a small diameter. This is because the small pores are capable of preventing the occurrence of reverse transfer of ions when a large concentration gradient arises on the anode side and the cathode side.

The free anions and cations which are formed in consequence of the electrolysis of water are preferred to have as high concentrations as possible. Specifically, the concentration is preferred to fall in the range of $10^{-6}$ - $10^{-1}$ mol/lit, more favorably in the range of $10^{-6}$ - $10^{-2}$ mol/lit, and particularly in the range of $10^{-4}$ - $10^{-2}$ mol/lit. Since the excess free hydroxyl ions react with a reducing substance and manifest an ability to eliminate superoxide as described specifically herein below, the concentration of excess free hydroxyl ions is preferred to be as high as possible. While the rise of the concentration of the excess free hydroxyl ions entails an increase in the pH value of the water, the excess free hydroxyl ions do not react with counter ions. The pH value of the water, therefore, can be adjusted with such an acid as, for example, ascorbic acid or hydrochloric acid before the water is put to use. The salts formed by neutralization consequently gain in concentration. When the water containing these salts is used for injection without removal of the salts, therefore, the concentration of the ions is preferred to fall in the range of $10^{-4}$ - $10^{-3}$ mol/lit. When the water for injection can be deprived of the salts thus formed during the course of production, however, the concentration of the excess free hydroxyl ions may exceed $10^{-3}$ mol/lit. When the water is used for drinking, the concentration may be in the range of $10^{-6}$ - $10^{-1}$ mol/lit.

The magnitude of the electric current to be used for DC application in this invention is preferred to fall in the range of 0.1 - 25 A, more favorably in the range of 2 - 20 A, and particularly in the range of 5 - 17 A. The reason for this range is that the range allows formation of free ions and also permits production of the excess free hydroxyl ion-containing water with a high yield. Incidentally, this magnitude of electric current is obtained for an effective area, 70 $cm^2$, of the cathode and the anode.

The electrolytic apparatus may be of a stationary type or a water flow type.

In the method of production, since the excess free hydroxyl ion-containing water formed by the method described above contains the electrolyte, this excess free hydroxyl ion-containing water may be distilled by the use of a distillation device, purified by the process of reverse osmosis, or treated by the combination of a distillation process and a reverse osmosis process so as to form an excess free hydroxyl ion water which has been deprived of the electrolyte. This excess free hydroxyl ion water contains excess free hydroxyl ions and dissolved hydrogen. The removal of the electrolyte may be effected by performing the distillation process alone, performing the reverse osmosis process alone, performing the reverse osmosis process after the distillation process, or performing the distillation process after the reverse osmosis process. The reverse osmosis process involved herein may be implemented by adopting the method popularly effected by the use of a reverse osmosis membrane. The reverse osmosis membrane is known in various types such as, for example, polyvinyl alcohol type, polytetraallyl ammonium type, and acetyl cellulose type. Among other types mentioned above, The acetyl cellulose type proves particularly favorable. The reason for this choice is that this type excels in the ratio of removal of the electrolyte.

(2) Free hydrogen ion-containing water

The free hydrogen ion-containing water of this invention is obtained by causing the excess free hydroxyl ion-containing water to react with a reducing substance thereby inducing formation of free hydrogen ions in the aqueous solution. The term "excess free hydroxyl ions" as used herein means such free hydroxyl ions as avoid reacting with cations (otherwise referred to as "counter ions") in the aqueous solution as mentioned above. The excess free hydroxyl ion-containing water is only required to contain excess free hydroxyl ions and is not particularly discriminated on account of the type of a method to be used for the production. It is nevertheless preferable to use the water formed on the cathode side by the electrolysis of water, namely the excess free hydroxyl ion-containing water according to this invention. The reason for this preferableness is that the excess free hydroxyl ion-containing water of this invention contains dissolved hydrogen in addition to the excess free hydroxyl ions and, as specifically described herein below, can acquire such excellent effects as, for example, realizing elimination of superoxide by means of the excess free hydroxyl ions and bringing a catalatic activity by means of the dissolved hydrogen. It is also allowable to use the aforementioned excess free hydroxyl ion water of this invention which has been obtained by subjecting the water electrolyzed on the

cathode side to a process of distillation or a process of reverse osmosis thereby inducing removal of the electrolyte.

In the excess free hydroxyl ion-containing water of this invention, excess free hydroxyl ions and L-ascorbic acid react with each other as follows.

The following formula (A) represents the reaction of L-ascorbic acid with free hydroxyl ions in the aforementioned water electrolyzed on the cathode side. This reaction proceeds in the range of a high pH value. It consists in substituting the hydroxyl groups at the 2 and 3 positions of the L-ascorbic acid for free hydroxyl ions. In this case, two free hydrogen ions are formed. Since this reaction occurs at a pH value in the range of 4 - 11, the magnitude of the pH of the water containing excess free hydroxyl ions used as the raw material is preferred to fall in the range mentioned above. While the free hydrogen ions thus formed manifest in themselves a reducing property, the two hydroxyl ions which have substituted the hydroxyl groups of the ascorbic acid each become a proton donor and manifest a reducing property. What is obtained by the reaction of the water containing excess free hydroxyl ions with a reducing substance, therefore, manifests the reducing action more powerfully than the reducing substance which is used alone. With reference to the following formula (A), two moles of hydroxyl ions react and form two moles of hydrogen ions and the two moles of hydroxyl group substituted in the ascorbic acid each become a proton donor and induce release of two moles of hydrogen ions, with the result that the reducing acvity by a total of four hydrogen ions will be manifested.

When sodium ascorbate (having a sodium atom linked to the 3 position) is used in the place of ascorbic acid, since the sodium linkage is extremely stable, only one mole of hydroxyl ions react and form one mole of free hydrogen ions and the hydroxyl group substituted solely at the 2 position of sodium ascorbate becomes a proton donor, with the result that the reducing activity by a total of two moles of free hydrogen atoms will be manifested. Precisely, the ability to eliminate superoxide is exalted by the presence of the excess free hydroxyl ions. Generally, the vital organism admits such reducing substances as ascorbic acid and polyphenols by eating a meal, for example. When the excess free hydroxyl ion-containing water of this invention is used for drinking or as the water for injection, therefore, it can be expected to manifest the ability to eliminate superoxide.

Formula (A)

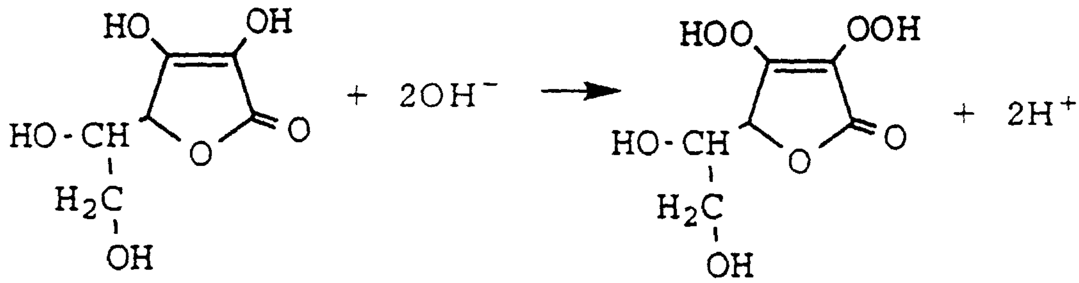

The formula (B) depicts the fact that the reaction of L-ascorbic acid with sodium hydroxide in the water electrolyzed at the cathode induces a reaction of neutralization at the 2 and the 3 position of the L-ascorbic acid in a region of a high pH value and forms two molecules of water. This reaction avoids the formation of free hydrogen owing to the reaction of the hydroxyl groups of sodium hydroxide with the ascorbic acid. It is, therefore, understood that for the purpose of producing the free hydrogen ion-containing water of this invention, the excess hydroxyl ions of the excess hydroxyl ion-containing water must be contained.

Formula (B)

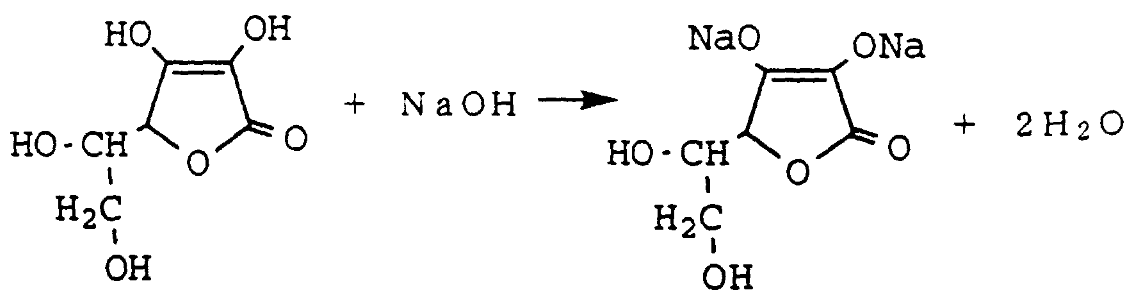

The formula (C) represents a reaction to form one molecule of water in a region of a low pH value. The reaction, however, does not form any free hydrogen ion.

Formula (C)

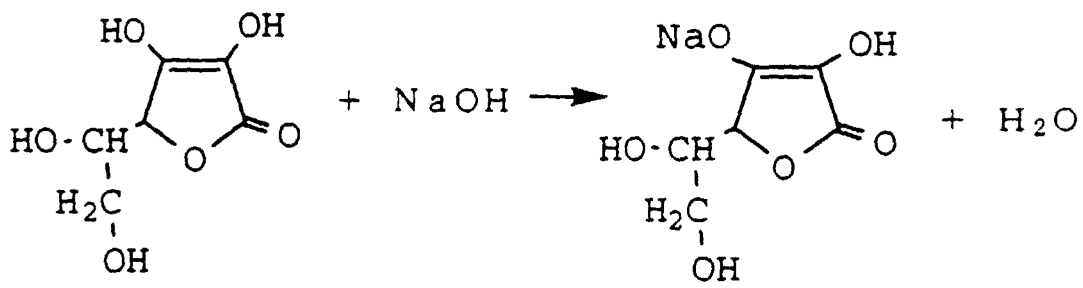

As the reducing substance, at least one member selected from the group consisting of ascorbic acid, ascorbates, polyphenol, quercetin, catechin, flavone, and flavonol can be used. Among other reducing substances cited above, ascorbic acid, sodium ascorbate, quercetin, and catechin prove favorable, and ascorbic acid proves particularly favorable because it excels in safety and in water-solubility as well. The amount of the reducing substance to be used is preferred to be such that the number of substituents, n, to be contained therein may exceed 1/n mole, more favorably fall in the range of 1/n - 3/n mole, per mole of excess free hydroxyl ions. The reason for this choice is that the amount of hydrogen ions to be formed is sufficient in the range. When NaCl is used as the electrolyte in the electrolysis of water, though hydrogen ions are generated also at the anode, the product of this electrolysis cannot be directly used for drinking because chlorine ions and the like are also present in the water electrolyzed on the anode side. In contrast, when the hydroxyl ions contained in the water electrolyzed on the cathode side are caused to react with the ascorbic acid mentioned above and the like, the relevant aqueous solution can be used optimally for drinking because the oxide of the reducing substance, excess free hydrogen ions, dissolved hydrogen, unaltered reducing substance, and hydroxyl ions are present therein.

(3) Analysis of water electrolyzed on the cathode side

Regarding the analysis of the water electrolyzed on the cathode side, when an anion-exchange membrane is used in the electrolytic apparatus, the amount of hydroxyl ions can be determined by the process of neutralization titration because the amount of chlorine ions on the cathode side is decreased by the amount of chlorine ions which has been passed to the anode side and sodium ions and hydroxyl ions jointly form sodium hydroxide. The decrease in the amount of chlorine ions mentioned above may be determined by the process of ion chromatography. The process of neutralization titration and the process of ion chromatography nearly equal in the degree of accuracy.

The total amount of the free hydroxyl ions and the hydroxyl ions of sodium hydroxide can be estimated by multiplying the electric current by the time and dividing the resultant product by the Faraday constant in accordance with

the Faraday's rule. The amount of the hydroxyl ions formed electrolytically on the cathode side (hereinafter the hydroxyl ions will be referred to specifically as "excess hydroxyl ions") can be determined by using as free hydroxyl ions "0" the amount of sodium hydroxide consumed when the aqueous electrolyte solution prior to electrolysis is acidified with hydrochloric acid of a stated concentration and then subjected to neutralization titration with sodium hydroxide of a stated concentration $[OH^{-1}]_0$ and the amount of sodium hydroxide consumed when the water formed in consequence of the electrolysis is neutralized with sodium hydroxide by the same method from the same pH value $[OH^{-1}]_{cathod}$ - $[OH^{-1}]_0$. The total amount of hydrogen ions on the anode side can be estimated by multiplying the electric current by the time, dividing the resultant product by the Faraday constant, and multiplying the resultant quotient by the current efficiency in accordance with the Faraday's rule. The amount of the free hydroxyl ions electrolyzedon the anode side can be determined by using as the free hydrogen ions "0" the amount of hydrochloric acid consumed when the aqueous electrolyte solution prior to electrolysis is alkalinized with sodium hydroxide of a stated concentration and then neutralized with hydrochloric acid of a stated concentration $[H^+]_0$ and the amount of hydrochloric acid consumed when the water formed in consequence of the electrolysis by the same method from the same pH value $[H^+]_{anod}$ - $[H^+]_0$. The electrode reactions which occur on the two electrode sides are shown below.

$$H_2O + e^- \rightarrow 1/2H_2 + OH^-_{(Cl)} \quad (1)$$

$$Na + OH^-_{(C2)} \rightarrow NaOH \quad (2)$$

$$[Cl^-_{(Cl)}] - [Cl_{(C2)}] = (Cl^-_{(C3)}] \quad (3)$$

$$[OH^-_{(C2)}] = [Cl^-_{(C3)}] \quad (4)$$

The amount of free hydroxyl ions, therefore, is found as follows.

$$[OH^{-1}]_{(C1)} \text{ x (current efficiency) - } [OH^{-1}]_{(C2)} = [OH^{-1}]_{cathod} - [OH^{-1}]_0.$$

In this formula, $[Cl^-_{(Cl)}]$, $[Cl_{(C2)}]$, and $[Cl^-_{(C3)}]$ represent respectively the concentration of chlorine ions prior to the electrolysis, the concentration of chlorine ions after the electrolysis, and the concentration of chlorine ions moved from the cathode side to the anode side. Then, $[OH^-_{(Cl)}]$ and $[OH^-_{(C2)}]$ represent respectively the total concentration of hydroxyl ions and the concentration of hydroxyl ions of sodium hydroxide.

The reactions which occur on the anode side are as follows.

$$1/2H_2O \rightarrow 1/4O_2 + H^+_{(a1)} + e^- \quad (5)$$

$$Cl^-_{(a1)} \rightarrow 1/2Cl_2 + e^- \quad (6)$$

$$1/2Cl_2 + H_2O \rightarrow HOCl + H^+_{(a2)} + e^- \quad (7)$$

$$H^+_{(a2)} + Cl^-_{(a2)} \rightarrow HCl \quad (8)$$

Since the amounts of chlorine ions on the two electrode sides are equal, the amount of chlorine ions diffused and moved from the cathode side to the anode side is found as follows.

$$[Cl^-_{(a1)}] + (Cl_{(a2)}] = [Cl^-_{(C3)}] \quad (9)$$

As a result, the electrode reactions of (5) and (6) proceed at the anode and the reactions of (5) and (8) form a salt. The amount of free hydrogen ions, therefore, is found as follows.

$$\{[H^+_{(a1)}] + (H^+_{(a2)}]\} \text{ x (current efficiency) - [HOCl] - [HCl]} = [H^+_{anod}] - [H^+]_0 \quad (10)$$

In this formula, $[H^+_{(a1)}] + [H^+_{(a2)}]$ represents the numerical value obtained by multiplying the electric current by the time of electrolysis and dividing the resultant product by the Faraday constant in accordance with the Faraday's rule and $[H^+_{(a1)}]$ represents the numerical value obtained by multiplying the electric current by the time of electrolysis and dividing the resultant product by the Faraday constant in accordance with the Faraday's rule. The $H^+_{(a2)}$ shown in the formula (7) is consumed for the production of OH.

The hydrogen molecules in the water formed electrolytically on the cathode side exist as dissolved in the water and the oxidation-reduction potential of the water can be found in accordance with the Nernst equation shown below.

$$Eh = 0.688 - 0.0885\ pH + 0.0074\ \log[O_2] - 0.0295\ \log[H_2] V \quad (11)$$

The amount of the dissolved hydrogen can be found by measuring the dissolved oxygen in accordance with the formula (11).

(4) Method for determination of excess free hydroxyl ions and action of dissolved hydrogen

The formation of the ions contained in the water electrolyzed on the cathode side, specifically the excess free hydroxyl ions, and the method for determination of the amount of the ions will be explained below. Though the method for the electrolysis of the aqueous electrolyte solution is known in two types, i.e. the batch type and the flow type, these two types are essentially identical in the principle of operation. The method will be described below as performed by the batch type by reason of the ease of analysis. It should be noted, however, that the data to be used for the description has been obtained by the method of the flow type.

For a start, Fig. 2 is a diagram illustrating the relation between the amount of the excess free hydroxyl ions in the water electrolyzedon the cathode side by the flow method and the magnitude of pH. As the conditions for the electrolysis, NaCl is used at a concentration of 0.002 mol as the electrolyte, electrodes obtained by coating a matrix of metallic titanium with a platinum-iridium alloy are used as the electrodes, and a surface area of 538.72 $cm^2$ is used for the electrodes. A distance of 1.5 mm is used between the two electrodes. Under these conditions of electrolysis, the aqueous electrolyte solution is passed at a flow rate of 3000 ± 20 ml per minute to effect the electrolysis at varying magnitudes of electric current, 8, 10, 12, 14, and 16 A.

In the water electrolyzed on the cathode side, the free hydroxyl ions formed anew by the electrolysis (excess free hydroxyl ions) and dissolved hydrogen are present together with sodium hydroxide as a basic component as described above.

Here, the strong base and the hydrochloric acid react at a ratio of 1 : 1 because they are each dissociated to 100%. As a result, the neutralization point of the reaction can be determined by acidifying the basic water electrolyzed on the cathode side to below pH 4 thereby inducing the state of excess hydrogen ions and subjecting the acidified water to neutralization titration with a strong base. Then, the curve of approximation can be obtained from the amount of the strong base required for the neutralization by plotting the values of pH and the amounts of titrant which vary till neutralization. By the same procedure, the curve of approximation of the aqueous electrolyte solution prior to the electrolysis can be obtained. Here, the amount of free hydroxyl groups is found from the difference between the amount of the solution prior to the electrolysis and the amount of the electrolyzed aqueous solution based on the average of the values found at five points between pH 4 and pH 4.5. Since the plots produce large errors in the neighborhood of pH 7, the range of pH 3.7 through pH 4.7 in which the plots produce only small errors is preferred to be used for the determination in question. Fig. 3 is a diagram obtained by making this measurement up to several repetitions thereby finding the standard deviation and plotting the amounts of excess free hydroxyl ions found in the successive steps of measurement. The total number of measurements is 5.

When the electrolyzed basic water is acidified with an excess amount of a strong acid, the sodium hydroxide as a strong base in the electrolyzed aqueous solution reacts with hydrochloric acid as a strong acid and forms sodium chloride, whereas the excess free hydroxyl ions avoid reacting with hydrochloric acid and retain the state of coexisting with the hydrochloric acid. When the neutralization titration is carried out with sodium hydroxide which is a strong base, it is the hydrochloric acid alone that participates in the reaction of neutralization with the strong base. At the neutralization point, therefore, the pH value is heightened proportionately to the amount of excess free hydroxyl ions which are present in the system.

It is noted from Fig. 3 that the excess free hydroxyl groups are formed in the largest amount under the electrode conditions mentioned above when the magnitude of the electric current applied is 14 A. This maximum magnitude is suspected to be fixed inherently by such factors as the conditions of electrolysis, the kind of electrode, the surface condition of electrode, and the distance between the electrodes. The amounts of excess free hydroxyl ions obtained at the varying magnitudes of electric current by the method described above are shown in Table 1.

Table 1

| current A | differences between 0 A and 8 to 20 A ml/50ml | concentration of $OH^{-1}$ M |
|---|---|---|
| 0 | 0 | 0 |

Table 1 (continued)

| current A | differences between 0 A and 8 to 20 A ml/50ml | concentration of $OH^{-1}$ M |
|---|---|---|
| 8 | 0.0041 | $4.1 \times 10^{-6}$ |
| 10 | 0.0191 | $1.91 \times 10^{-5}$ |
| 12 | 0.03 | $3 \times 10^{-5}$ |
| 14 | 0.0334 | $3.34 \times 10^{-5}$ |
| 16 | 0.0301 | $3.01 \times 10^{-5}$ |
| 20 | 0.0115 | $1.15 \times 10^{-5}$ |

Then, the water electrolytically formed with the electric current of 14 A is tested for the ability to eliminate superoxide in L-ascorbic acid, quercetin, and catechin. The results of this test are shown in Fig. 4. The water electrolyzed on the cathode side contains excess hydroxyl ions, dissolved hydrogen, and $Na^+$. Specifically, the ability to eliminate superoxide of SOD is determined by preparing a sample consisting of 50 ml of the water electrolyzed on the cathode side and $1 \times 10^{-5}$ mol of a given one of the reagents mentioned above, measuring the electron spin resonance of the sample, and rating the result of this measurement with the aid of the calibration curve. It is clearly noted from Fig. 4 that the electrolyzed aqueous solution containing excess free hydroxyl ions, while in its unmodified form, exhibits no ability to eliminate superoxide but that the water, after undergoing the reaction with a reducing substance such as ascorbic acid, quercetin, or catechin, exhibits an enhanced ability to eliminate superoxide as compared with the relevant reducing substance used singly. The enhanced ability may be logically explained by supposing that the excess free hydroxyl ions contained in the electrolyzed aqueous solution substitute the protons of the reducing substance to liberate the protons and, at the same time, convert the protons in the substituted excess free hydroxyl ions into proton donors and, as a result, the protons allowed to react with the superoxide grow in amount. The reducing substance mentioned above which is capable of resisting oxidation, while in its unmodified form, still manifests the ability to eliminate superoxide to a certain level. When the reducing substance, after reacting with the electrolyzed aqueous solution containing excess free hydroxyl ions, enjoys an improvement in the ability under discussion.

Fig. 5 represents the data obtained by testing the water electrolyzedon the cathode side and the liquid produced by boiling this water for the ability to eliminate hydrogen peroxide in the aqueous electrolyte solution prior to electrolysis. The generation of hydroxy radicals by hydrogen peroxide and ferrous ions is a reaction famous as the Fenton reaction. The data has resulted from a procedure which comprises generating hydroxy radicals by means of this reaction and measuring the amounts of the radicals along the course of time. The hydroxy radicals thus generated react with the dissolved hydrogen in the form of hydrogen molecules formed in the water electrolyzed on the cathode side. When the dissolved hydrogen catalyzed by inert electrodes is present, it reacts with hydrogen peroxide resulting from the union of two hydroxy radicals and consequently forms water and oxygen. As a result, the elimination of hydrogen peroxide is observed only when the dissolved hydrogen is present. This fact demonstrates that the dissolved hydrogen is possessed of the ability to eliminate hydroxy radicals in the vital organ, namely an action similar to the catalase ($H_2O_2 + H_2 = 2H_2O$). That is to say, when the free hydrogen ion-containing water of this invention is used for drinking or as the water for injection, it can be expected to manifest the action of catalase. The excess free hydroxyl ion-containing water, the free hydrogen ion-containing water, the excess free hydroxyl ion water, and the electrolyzed aqueous solution for injection as well which are contemplated by this invention invariably contain the dissolved hydrogen and, therefore, can be expected to produce the catalytic effect.

Incidentally, the excess free hydroxyl ions in the excess free hydroxyl ion-containing water and the like defy analysis by the standard method because they are present in water as incorporated in the network of water and caused to form hydrogen bond. They can be analyzed by a procedure which comprises subjecting them to the reaction of neutralization with such a reducing substance as ascorbic acid, catechin, quercetin, flavone, or flavonol and then testing the product of neutralization for the ability to eliminate superoxide radicals by the process of electron spin resonance. Incidentally, the formation of the excess free hydroxyl ions can be confirmed by comparison using purified water of the same quality as a control.

(5) Use

The excess free hydroxyl ion-containing water, the excess free hydroxyl ion water, and the free hydrogen ion water of this invention contain excess free hydroxyl ions, dissolved hydrogen, etc. and are invariably usable for drinking. They are also usable as the solvent for an injection, the solvent for such medicines as intravenous drips, and the like.

The injections include intravenous injection and hypodermic injection and the intravenous drips embrace the case of direct transfer of drips into the abdominal cavity through a catheter in addition to the case of intravenous transfer of drips.

(6) Electrolyzed aqueous solution -containing water for injection

The electrolyzed aqueous solution -containing water for injection according to this invention is characterized by containing therein excess free hydroxyl ions and dissolved hydrogen. The excess free hydroxyl ions react with a reducing substance as described above and manifest the ability to eliminate superoxide and the dissolved hydrogen manifests the catalatic activity. Since the excess free hydroxyl ions and the dissolved hydrogen avoid reacting with counter ions and barely succumb to a reaction of substitution for the hydroxyl groups an a reducing substance, the water under discussion enjoys efficient transport into the vital organism when it is used for injection. The dissolved hydrogen is enabled by activation to eliminate the hydrogen peroxide which is formed by the abnormal intestinal fermentation and the hydrogen peroxide which is formed when the superoxide loses homogeneity. The electrolyzed aqueous solution -containing water for injection according to this invention, therefore, effectively manifests the activity mentioned above, no matter whether it is administered orally, percutaneously, intravenously, or intrapenitoneally. The electrolyzed aqueous solution - containing water for injection according to this invention is characterized by containing excess free hydroxyl ions and dissolved hydrogen and is capable of conferring such other essential conditions as the generation of osmotic pressure and the elimination of pyrogens which are generally expected of any injection or water for injection.

The electrolyzed aqueous solution -containing water for injection according to this invention can be produced as an aqueous electrolyte solution or a solvent for the aqueous electrolyte solution in the same manner as the aforementioned excess free hydroxyl ion-containing water by using purified water, deionized water, or superpure water. In this case, the electrolyzed aqueous solution which is produced by the electrolysis of the aqueous electrolyte solution on the cathode side contains excess free hydroxyl ions and dissolved hydrogen and emanates from the electrolytic cell via the outlet. The electrolyzed aqueous solution -containing water for injection according to this invention is produced in a form containing at least excess free hydroxyl ions by preparing an excess free hydroxyl ion-containing water, excess free hydroxyl ion water, or free hydrogen ion water as described above, then depriving the water of such foreign matter as endotoxin by the use of forced purging means, further refining the water by the use of superfiltering means, and subjecting the refined water to a sterilizing treatment using sterilizing means. The excess free hydroxyl ion-containing water or the free hydrogen ion water, prior to use, may be deprived of the electrolyte contained therein by the use of purging means other than that mentioned above either before or after the purging or sterilizing means, depending on the kind of use.

The other purging means mentioned above is adapted as follows. When the water for injection is required to contain only excess free hydroxyl ions (namely when the excess free hydroxyl ion water is used), the purging means mentioned above is enabled to effect the removal of the electrolyte by the process of distillation or the combination of the process of distillation with the process of reverse osmosis. In contrast, when the water for injection is required to contain both excess free hydroxyl ions and dissolved hydrogen (namely when the excess free hydroxyl ion-containing water or the free hydrogen ion-containing water is used), the purging means mentioned above is enabled to effect the removal of the electrolyte by the sole use of the process of reverse osmosis and the sterilizing means is adapted to utilize the ultraviolet light for the sterilization. It is provided that when the process of distillation is resorted to, the excess free hydroxyl ion water is made by the purging treatment to contain excess free hydroxyl ions alone because the dissolved hydrogen is presently in a gaseous form and, therefore, is diffused. When the process of reverse osmosis is resorted to, however, the dissolved hydrogen is allowed to persist and the excess free hydroxyl ions and the dissolved hydrogen are contained. The water for injection can be converted into an electrolyzed aqueous solution -containing water for injection by a procedure which comprises depriving the water of such harmful substances as endotoxin by filtration and then sterilizing it by a method other than heating such as, for example, the exposure to the ultraviolet light.

The electrolyzed aqueous solution -containing water for injection according to this invention may contain sodium chloride or glucose, when necessary for the adjustment of osmotic pressure.

(7) Effect

The electrolyzed aqueous solution -containing water for injection according to this invention has the following effects.

(i) The intravenous drips containing the excess free hydroxyl ions, when directly administered into the blood, can mend a disease caused by active oxygen easily and efficiently without discernibly inducing any secondary effect.
(ii) The excess free hydroxyl ions, when the slightly dissociated water molecules have their energy balance established by the fact that they are transported as electrons in consequence of the diffusion and migration of the ions by virtue of the electrolysis, are formed as ions which have survived the transportation. They manifest an excellent effect of being easily produced even on a commercial scale because the relevant reaction proceeds electrochemically and, therefore, allows very simple and stoichiometric handling and because the ions can be produced inexpensively.

(iii) The electrolyzed aqueous solution can be deprived of the electrolyte and other foreign matter by the process of distillation or the process of reverse osmosis. Thus, the excess free hydroxyl ion water which efficiently retains free ions can be produced with ease. Further, the electrolyzed aqueous solution -containing water for injection which contains at least excess free hydroxyl ions according to this invention has a prominent effect of permitting itself to be utilized even as a medicine by only requiring the accuracy of production to be heightened.

EMBODIMENTS

This invention will be described more specifically below with reference to working examples. It should be noted, however, that this invention is not limited to these examples.

Example 1

In an electrolytic cell made of hard vinyl chloride, an anion-exchange membrane and electrodes of platinum separated by a distance of 2 mm were used, 400 ml of an aqueous solution containing $10^{-1}$ mol of sodium chloride was placed each on the cathode side and the anode side, a direct current of 0.5 A was applied between the electrodes, the ensuing electrolysis was continued for varying durations of 3, 5, 7, 9, and 11 minutes. The electrolytic solutions consequently obtained were subjected to neutralization titration. The concentrations of chlorine ions, dissolved hydrogen, and hydroxyl ions formed on the cathode side were determined by the method of ion chromatography. An aqueous solution containing $10^{-4}$ mol of sodium chloride was similarly electrolyzed by application of a direct current of 0.1 A for 15 minutes. The concentrations of chlorine ions and hydroxyl ions were determined in the same manner as above. Then, the concentrations of chlorine ions and hydrogen ions formed on the anode side were determined and the total amounts of hydroxyl ions and hydrogen ions were found in accordance with the Faraday equation and the relevant free ions were determined. The electrolytic solution was separated into water and electrolyte component through the medium of a reverse osmosis membrane to gather free ions and dissolved hydrogen in water and obtain excess free ion-containing water. The results of this experiment are shown in Table 2 and Table 3. In Table 2, ORP (V) means Oxidation-reduction potential (V) after electrolysis.

Table 2

| Concentrations of ions of varying species (Unit of concentration: $10^{-3}$ mol/400 ml) | | | | | | |
|---|---|---|---|---|---|---|
| | DC applied | Total $OH^-$ | $OH^-$ of NaOH | ORP (V) | dissolved hydrogen | Free $OH^-$ |
| 3 min | 0.5A | 0.9328 | 0.8952 | 0.12 | 0.1 | 0.0376 |
| 5 min | 0.5A | 1.5546 | 1.4128 | | | 0.1418 |
| 7 min | 0.5A | 2.1765 | 1.9448 | -0.649 | 0.45 | 0.2317 |
| 9 min | 0.5A | 2.7984 | 2.5256 | | | 0.2728 |
| 11min | 0.5A | 3.3802 | 3.80874 | -0.681 | 0.53 | 0.2928 |
| 15min | 0.1A | 0.09328 | 0.08977 | | | 0.00351 |

Table 3

| Concentrations of ions of varying species (Unit of concentration: $10^{-3}$ mol/400 ml) | | | | |
|---|---|---|---|---|
| | Direct current applied | Total $H^+$ | HCl of $H^+$ | Free $OH^-$ |
| 3 min | 0.5A | 0.9328 | 0.8072 | 0.1256 |

Table 3 (continued)

| Concentrations of ions of varying species (Unit of concentration: $10^{-3}$ mol/400 ml) | | | | |
|---|---|---|---|---|
| | Direct current applied | Total $H^+$ | HCl of $H^+$ | Free $OH^-$ |
| 5 min | 0.5A | 1.5546 | 1.2944 | 0.2602 |
| 7 min | 0.5A | 2.1765 | 1.7640 | 0.4125 |
| 9 min | 0.5A | 2.7984 | 2.2688 | 0.5296 |
| 11min | 0.5A | 3.3802 | 2.8472 | 0.5730 |
| 15min | 0.1A | 0.09328 | 0.08055 | 0.01273 |

Example 2

In a distillation device, 400 ml of the water formed on the cathode by the 9 minutes' electrolysis of Example 1 was placed and distilled until 200 ml of the water was expelled by the distillation. The residual water was cooled and then analyzed quantitatively for sodium ions and chlorine ions by the ion chromatography. The resultant analyses were on a par with those of purified water used for control. This fact demonstrates that the ions of species other than excess free hydroxyl ions were removed.

Example 3

Mixed solutions prepared by diluting the excess free hydroxyl ion-containing electrolyzed aqueous solution produced in Example 1 with L-ascorbic acid to pH 7.0 were tested for the ability to eliminate superoxide anions by the method of electron spin resonance. They were consequently demonstrated to have formed free hydrogen ions. The results are shown in Table 4. For the control of pH adjustment, NaOH equal in pH value to the electrolyzed aqueous solution was used.

For the purpose of confirming the formation of free hydroxyl ions, 100 ml of the distilled water formed electrolytically on the cathode was caused to form free protons by the incorporation of 5 ml of L-ascorbic acid and was then tested for the ability to eliminate the superoxide produced by a hypoxanthine-xanthine oxidase system by the use of an electron spin resonance device. For the control, purified water of the equal quality was used. The results are shown in Table 5.

Table 4

| Ability to eliminate superoxide (unit: Unit/g) | | | |
|---|---|---|---|
| | Direct current applied | Electrolyzed aqueous solution | NaOH |
| 3 min | 0.5A | 80 | 80 |
| 5 min | 0.5A | 150 | 120 |
| 7 min | 0.5A | 220 | 190 |
| 9 min | 0.5A | 270 | 240 |
| 11 min | 0.5A | 350 | 280 |
| 15 min | 0.1A | 90 | 80 |

Table 5

| Ability to eliminate superoxide (unit: Unit/g) | | |
|---|---|---|
| | Excess free hydroxyl ion water | Purified water |
| 9 min | 270 | 220 |

Example 4

Four thousand (4000) ml of the water electrolytically formed on the cathod by the 7 minutes' electrolysis in Example 1 was treated by the process of reverse osmosis and then analyzed quantitatively for sodium ions and chlorine ions by the method of ion chromatography. The resultant analyses were on a par with those of purified water used as the control. This fact demonstrates that the ions of species other than free hydroxyl ions were removed. One hundred (100) ml of the water formed electrolytically on the cathode and treated by the process of reverse osmosis were caused to form free protons by incorporating 5 ml of L-ascorbic acid and then tested for the ability to eliminate the superoxide produced by a hypoxanthine-xanthin oxidase system by the use of an electron spin resonance device. For the control, purified water of equal quality was used. The results are shown in Table 6.

Table 6

| Ability to eliminate superoxide (unit: Unit/g) | | |
|---|---|---|
| | Excess free hydroxyl ion water | Purified water |
| 7 min | 260 | 220 |

Example 5

Four thousand (4000) ml of the water electrolytically formed on the cathode by the 11 minutes' electrolysis in Example 1 was distilled and treated by the process of reverse osmosis, and analyzed quantitatively for sodium ions and chlorine ions by the ion chromatography. The resultant analyses were on a par with those of the purified water used for the control. This fact demonstrates that the ions of species other than free hydroxyl ions were removed. One hundred (100) ml of the water formed electrolytically on the cathode which had been distilled and treated by the process of reverse osmosis was caused to form free protons by incorporating 5 ml of L-ascorbic acid and then tested for the ability to eliminate the superoxide produced by a hypoxanthine-xanthine oxidase system by the use of an electron spin resonance device. For the control, purified water of equal quality was used. The results are shown in Table 7.

Table 7

| Ability to eliminate superoxide (unit: Unit/g) | | |
|---|---|---|
| | Excess free hydroxyl ion water | Purified water |
| 11 min | 350 | 280 |

Example 6

The waters formed electrolytically on the cathode side by the 3, 7, and 11 minutes' electrolysis in Example 1 were frozen. The frozen lumps were thawed after one week's standing and tested for oxidation-reduction potential. The results are shown in Table 8.

Table 8

| Duration of electrolysis | Oxidation-reduction potential (V) after electrolysis | Oxidation-reduction potential (V) after thawing of frozen lumps |
|---|---|---|
| 3 min | 0.121 | 0.112 |
| 7 min | -0.664 | -0.650 |
| 11 min | -0.671 | -0.667 |

Example 7

The aqueous electrolyte solutions formed on the cathode side by the 7 minutes' electrolysis were frozen, left standing for 1, 2, 3, 4, and 5 weeks, thawed, and tested for oxidation-reduction potential. The potentials thus found were compared with the oxidation-reduction potential found immediately after the electrolysis. The results are shown in Table 9.

Table 9

| Duration of standing of frozen lumps | Oxidation-reduction potential (V) after electrolysis | Oxidation-reduction potential (V) after thawing of frozen lumps |
|---|---|---|
| 1 week | -0.664 | -0.650 |
| 2 week | -0.603 | -0.647 |
| 3 week | -0.543 | -0.640 |
| 4 week | -0.430 | -0.632 |
| 5 week | -0.418 | -0.616 |

Example 8

Tap water was electrolyzed by the use of an electrolytic device for home use. The water electrolytically formed on the cathode side was frozen, thawed, and tested for oxidation-reduction potential. The results are shown in Table 10.

Table 10

| Duration of standing of frozen lumps | Oxidation-reduction potential (V) after electrolysis | Oxidation-reduction potential (V) after thawing of frozen lumps |
|---|---|---|
| 3 week | -0.030 | -0.025 |

Example 9

The electrolytic solution obtained by the 9 minutes' electrolysis in Example 1 was tested by the neutralization titration and the method of ion chromatography for the concentrations of chlorine ions and hydroxyl ions formed on the cathode side. Then, the concentrations of the chlorine ions and the hydroxyl ions formed on the anode side were determined to find the total amount of hydroxyl ions in accordance the Faraday equation. The solution was adjusted with L-ascorbic acid to pH 7.0. The solution containing free hydroxyl ions was administered intravenously dripwise to a dog suffering from lymphosarcoma over a period of 24 hours. As a result, the count of white blood cells decreased from 55800/μl to 34500/μl and the count of platlets increased from 39000/μl to 106000/μl.

Example 10

A 50-ml sample of the electrolytic solution containing the excess free hydroxyl ions and obtained after the 9 minutes' electrolysis in Example 1, after adding hydrogen peroxide of a concentration of 0.2 ppm, was tested for the ability to eliminate superoxide. An aqueous sodium hydroxide solution adjusted to the same pH value as the electrolyzed aqueous solution was tested for the ability to eliminate superoxide by way of comparison. The results after two hours were 0.19 ppm for sodium hydroxide and 0.00 ppm for the electrolyzed aqueous solution . This fact demonstrates that the free hydroxyl ions in the water formed electrolytically on the cathode fulfilled the role of a scavenger by directly substituting the hydrogen peroxide. The sodium hydroxide was destitute of this activity.

Example 11

In an electrolytic cell made of hard vinyl chloride, an anion-exchange membrane and electrodes of platinum separated by a distance of 2 mm were used, a solution having $10^{-1}$ mol of sodium chloride dissolved in purified water was placed each on the cathode side and the anode side, a direct current of 0.5 A was applied between the electrodes, and the ensuing electrolysis was continued for 11 minutes. The electrolytic solution consequently obtained was tested for the concentrations of chlorine ions and hydroxyl ions formed on the cathode side by the neutralization titration and the method of ion chromatography to find an excess free hydroxyl ion concentration of $0.2928 \times 10^{-3}$ mol/400 ml. It was purified by the process of reverse osmosis and the process of superfiltration to obtain an electrolyzed aqueous solution -containing water for injection containing excess free hydroxyl ions and dissolved hydrogen in water. This water was subjected to the ultraviolet sterilization and adjusted with sodium chloride to the same concentration as the physiological saline solution. Then, 200 ml of the water thus prepared was administered dripwise to a dog suffering from lymphosarcoma over a period of 24 hours. As a result, a conspicuous increase was observed in the count of blood platelets. The lymphocytes were substantially vanished and the dog recovered appetite. The results are shown in Table 11.

Table 11

| | Before administration | After administration |
|---|---|---|
| WBC | 55800/μl | 34500/μl |
| PLT | 39000/ul | 106000/μl |

Example 12

In an electrolytic cell made of hard vinyl chloride, an anion-exchange membrane and electrodes of platinum separated by a distance of 2 mm were used, a solution having $10^{-1}$ mol of sodium chloride dissolved in purified water was placed each on the cathode side and the anode side, a direct current of 0.5 A was applied between the electrodes, and the ensuing electrolysis was continued for 11 minutes. The electrolytic solution consequently obtained was tested for the concentrations of chlorine ions and hydroxyl, ions formed on the cathode side by the neutralization titration and the method of ion chromatography to find an excess free hydroxyl ion concentration of $0.2928 \times 10^{-3}$ mol/400 ml. It was purified by the process of reverse osmosis and the process of superfiltration, sterilized by the ultraviolet light, and then diluted with sodium chloride to the same concentration as the physiological saline solution. A portion, 720 ml, of the electrolyzed aqueous solution -containing water for injection consequently obtained was administered dripwise to a dog suffering from acute renal failure over a period of 48 hours. When the blood extracted from the dog was biochemically tested, the ALP reached 228 U/ml and the BUN reached 4.6 mg/dl. The results demonstrate that the dog was relieved from the acute renal failure.

Example 13

In an electrolytic cell made of hard vinyl chloride, an anion-exchange membrane and electrodes of platinum separated by a distance of 2 mm were used, a solution having $10^{-1}$ mol of sodium chloride dissolved in purified water was placed each on the cathode side and the anode side, a direct current of 0.5 A was applied between the electrodes, and the ensuing electrolysis was continued for 11 minutes. The electrolytic solution consequently obtained was tested for the concentrations of chlorine ions and hydroxyl ions formed on the cathode side by the neutralization titration and the method of ion chromatography to find an excess free hydroxyl ion concentration of $0.2928 \times 10^{-3}$ mol/400 ml. It was purified by the process of reverse osmosis and the process of superfiltration. The resultant aqueous solution containing excess free hydroxyl ions and dissolved hydrogen was sterilized by the ultraviolet light and then diluted with sodium

chloride to the same concentration as the physiological saline solution. A portion, 200 ml, of the electrolyzed aqueous solution -containing water for injection consequently obtained was administered dripwise to a dog suffering from steroidal hepatitis over a period of 24 hours. When the blood extracted from the dog was biochemically tested, the ALP was effectively improved. The results are shown in Table 12. The numerical values shown in the table were based on the denomination of U/ml.

Table 12

| before | 8 hr | 16 hr | 24 hr | 32 hr | 40 hr |
|---|---|---|---|---|---|
| 2171 | 1293 | 912 | 739 | 621 | 400 |

Example 14

In an electrolytic cell made of hard vinyl chloride, an anion-exchange membrane and electrodes of platinum separated by a distance of 2 mm were used, 400 ml of a solution having $10^{-4}$ mol of sodium chloride dissolved in purified water was placed each on the cathode side and the anode side, a direct current of 0.1 A was applied between the electrodes, and the ensuing electrolysis was continued for 25 minutes. The electrolytic solution consequently obtained was tested for the concentrations of chlorine ions and hydroxyl ions formed on the cathode side by the neutralization titration and the method of ion chromatography to find the total amount of hydroxyl ions in accordance with the Faraday equation and then diluted with L-ascorbic acid to pH 7.0. A portion of 720 ml of the resultant aqueous solution containing excess free hydroxyl ions was administered dripwise to a dog suffering from acute renal failure over a period of 24 hours. When the blood extracted from the dog was biochemically tested, the ALP decreased from 680 to 228 U/ml and the BUN decreased from 10.1 to 4.6 mg/dl, a normal level. The results demonstrate that the renal failure was greatly improved.

The use of the free hydrogen ion-containing water of this invention could recover the dog's renal function. This fact demonstrates that owing to the reaction of neutralization of free hydroxyl ions with L-ascorbic acid, the free hydrogen ions consequently formed functioned as a scavenger for free radicals.

Example 15

In an electrolytic cell made of hard vinyl chloride, an anion-exchange membrane and electrodes of platinum separated by a distance of 2 mm were used, 400 ml of a solution of 1 mol of sodium chloride was placed each on the cathode side and the anode side, a direct current of 5 A was applied between the electrodes, and the ensuing electrolysis was continued for 54 seconds. The electrolytic solution consequently obtained was tested for the concentrations of chlorine ions and hydroxyl ions formed on the cathode side by the neutralization titration and the method of ion chromatography to find the total amount of hydroxyl ions and the amount of hydrogen ions in accordance with the Faraday equation and then the free ions therein were determined. It was consequently found that the total $OH^{-1}$ concentration was $2.7984 \times 10^{-1}$ mol/400 ml, the $OH^{-1}$ concentration of NaOH was $2.5196 \times 10^{-1}$ mol/400 ml, and the free $OH^{-1}$ concentration was $0.2788 \times 10^{-1}$ mol/400 ml. As regards the free hydrogen ion concentrations, the total $H^+$ was $2.7984 \times 10^{-1}$ mol/400 ml, the $H^+$ of HCl + HOCl was $2.2659 \times 10^{-1}$ mol/400 ml, and the free $H^+$ was $0.5325 \times 10^{-1}$ mol/400 ml, and the dissolved hydrogen was $10^{-5}$ -$10^{-6}$mol/400ml. The ability to eliminate superoxide was 270 unit/g for the electrolyzed aqueous solution and 240 unit/g for the control (NaOH).

In the case of a patient whose atopic dermatitis could not be cured with numerous kinds of medicines including steroidal drug, the free hydrogen ion-containing water electrolytically formed on the anode, when applied several times daily to the portions of damaged skin inflicted by the atopic dermatitis on the patient's forehead, mended the damaged portions in 5 days to the normal skin. The itching sensation was brought to a stop and the inflammatory condition was perfectly mended.

Example 16

In a flow type electrolytic apparatus which was furnished with a storage tank 11, 1000 ml in inner volume, having a tap directly connected to the water pipe located at Nishishimbashi, Minato-ku, Tokyo, electrodes having a titanium matrix coated with platinum and separated by a distance of 1.5 mm were used as the electrodes 2 and 3 and a cation-exchange membrane was interposed as the diaphragm 4 between the electrodes, the tap water was fed to the apparatus at a flow rate of 500 ml per minute while a DC of 5 A was applied thereto, and the ensuing electrolysis was continued for 2 minutes. With the aid of the pH meter 11a, the oxidation-reduction potentiometer 11b, and the dissolved oxygen meter 11c which were provided for the apparatus, the concentration of free hydrogen ions and the concentration of dissolved hydrogen were calculated in accordance with the formulas (2) and (3) and were digitally displayed. The pH value of the electrolyzed aqueous solution was 9.0, the concentration of dissolved oxygen was 6.5 ppm, and the oxidation-reduction potential was 0.025 V as reduced to the hydrogen electrode.

$$(OH^-)_{free} = f(A) - f(pH) \quad (2)$$

$$\log [H_2] = 1/0.0295 (0.6898 - 0.0885 pH + 0.0071 \log[O_2] - Eh) \quad (8)$$

From the formula (2) are derived

$$f(A) = 2 (min) \times 60 (seconds) \times 5(A)/96485 (Faraday\ constant) = 6.2185 \times 10^{-3} mol/l \quad (12)$$

$$f(pH) = 1 \times 10^{-5} mol/l \quad (13)$$

$$(OH^-)_{free} = 6.2185 \times 10^{-3} - 1 \times 10^{-5} = 6.2085 \times 10^{-3} mol/l \quad (14)$$

From the formula (8) are derived

$$\log [H_2] = 1/0.0295 (0.688 - 0.0885 \times 9 + 0.007 \log [2.0313 \times 10^{-4}] - 0.025) = 5.4015 \quad (15)$$

$$H_2 = 3.9676 \times 10^{-6} mol/l \quad (16)$$

Concentration of excess free hydroxyl ions: $6.2185 \times 10^{-3}$ mol/l
Concentration of dissolved hydrogen: $3.9673 \times 10^{-6}$ mol/l

Example 17

In a flow type electrolytic apparatus which was furnished with a storage tank 11, 1000 ml in inner volume, having a tap directly connected to the water pipe located at Nishishimbashi, Minato-ku, Tokyo, electrodes having a titanium matrix coated with platinum and separated by a distance of 1.5 mm were used as the electrodes 2 and 3 and a cation-exchange membrane was interposed as the diaphragm 4 between the electrodes, the tap water was fed to the apparatus at a flow rate of 500 ml per minute while a DC of 5 A was applied thereto, and the ensuing electrolysis was continued for 2 minutes. With the aid of the pH meter 11a, the oxidation-reduction potentiometer 11b, and the dissolved oxygen meter 11c which were provided for the apparatus, the concentration of free hydrogen ions and the concentration of dissolved hydrogen were calculated in accordance with the formulas (2) and (3) and were digitally displayed. The pH value of the electrolyzed aqueous solution was 9.5, the concentration of dissolved oxygen was 7.3 ppm, and the oxidation-reduction potential was -0.010 V as reduced to the hydrogen electrode.

$$(OH^-)_{free} = f(A) - f(pH) \quad (2)$$

$$\log [H_2] = 1/0.0295 (0.6898 - 0.0885 pH + 0.0071 \log[O_2] - Eh) \quad (8)$$

From the formula (2) are derived

$$f(A) = 2(min) \times 60(seconds) \times 5(A)/96485 (Faraday\ constant) = 6.2185 \times 10^{-3} mol/l \quad (12)$$

$$f(pH) = 3.1623 \times 10^{-5} mol/d \quad (17)$$

$$(OH^-)_{free} = 6.2185 \times 10^{-3} - 3.1623 \times 10^{-5} - 6.1869 \times 10^{-3} mol/l \quad (18)$$

From the formula (8) are derived

$$\log[H_2] = 1/0.0295 (0.688 + 0.0885 \times 9.5 + 0.007 \log[2.2813 \times 10^{-4}] + 0.01) = -5.7031 \quad (19)$$

$$H_2 = 1.9811 \times 10^{-6} mol/l \quad (20)$$

Concentration of free hydroxyl ions: $6.1869 \times 10^{-3}$ mol/l

Concentration of dissolved hydrogen: $1.9811 \times 10^{-6}$ mol/l

Naturally this invention is not limited to the examples cited above. Since the city water by nature has a substantially fixed concentration of dissolved oxygen, the concentration of dissolved hydrogen in the city water can be calculated on the sole basis of pH and oxidation-reduction potential.

## Claims

1. An electrolyzed aqueous solution -containing water for injection, characterised by its containing excess free hydroxyl ions and dissolved hydrogen.

2. An electrolyzed aqueous solution -containing water for injection, characterised by its containing water electrolyzed on the cathode side obtained by placing an aqueous electrolyte solution in an electrolytic cell provided with a cathode and an anode both of inert electrodes and a diaphragm interposed between the electrodes and passing a direct current between the cathode and the anode, thereby electrolyzing the aqueous electrolyte solution.

3. A free hydrogen ion-containing water, characterized by its having been produced by the reaction of an excess free hydroxyl ion-containing water with a reducing agent.

4. A water as claimed in Claim 1, characterised in that the content of excess free hydroxyl ions in the excess free hydroxyl ion-containing water is in the range of $10^{-6}$ to $10^{-2}$ mol/l.

5. A water as claimed in Claim 3, characterised in that the agent is at least one member selected from ascorbic acid, ascorbates, polyphenol, quercetin, catechin, flavone, and flavanol.

6. A method for determining the concentration of excess free hydroxyl ions, characterised by the steps of neutralizing the excess free hydroxyl ions with ascorbic acid and then measuring the ability of the product of neutralization to eliminate superoxide radicals by the method of electron spin resonance.

FIG. 1

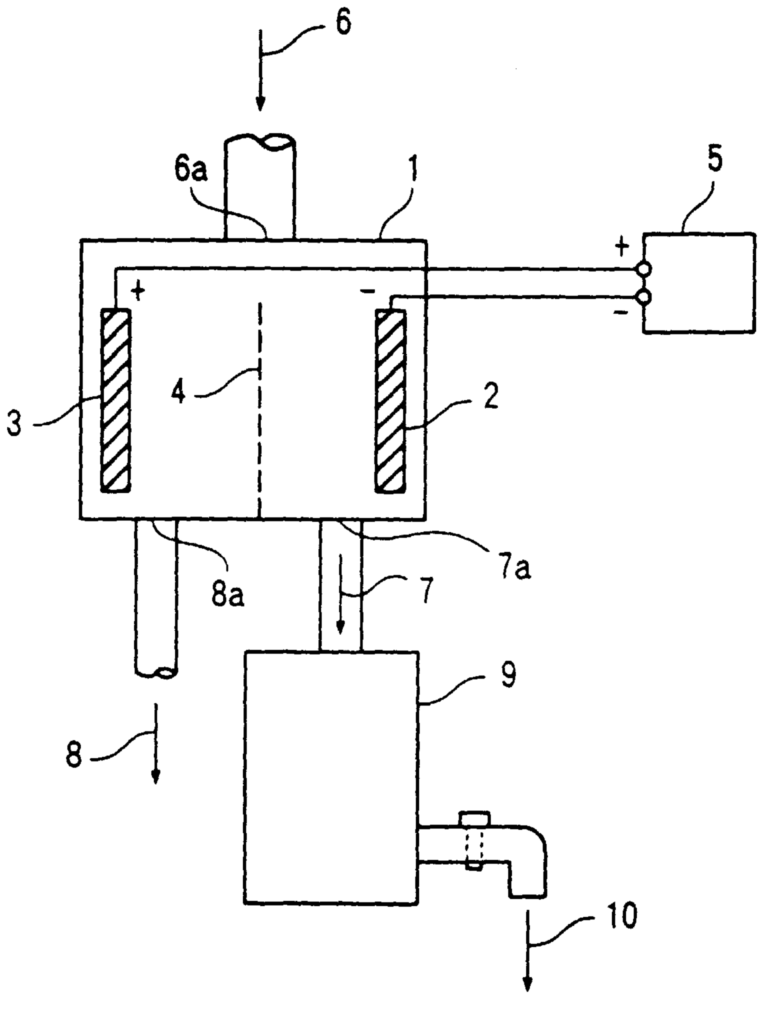

# FIG. 2

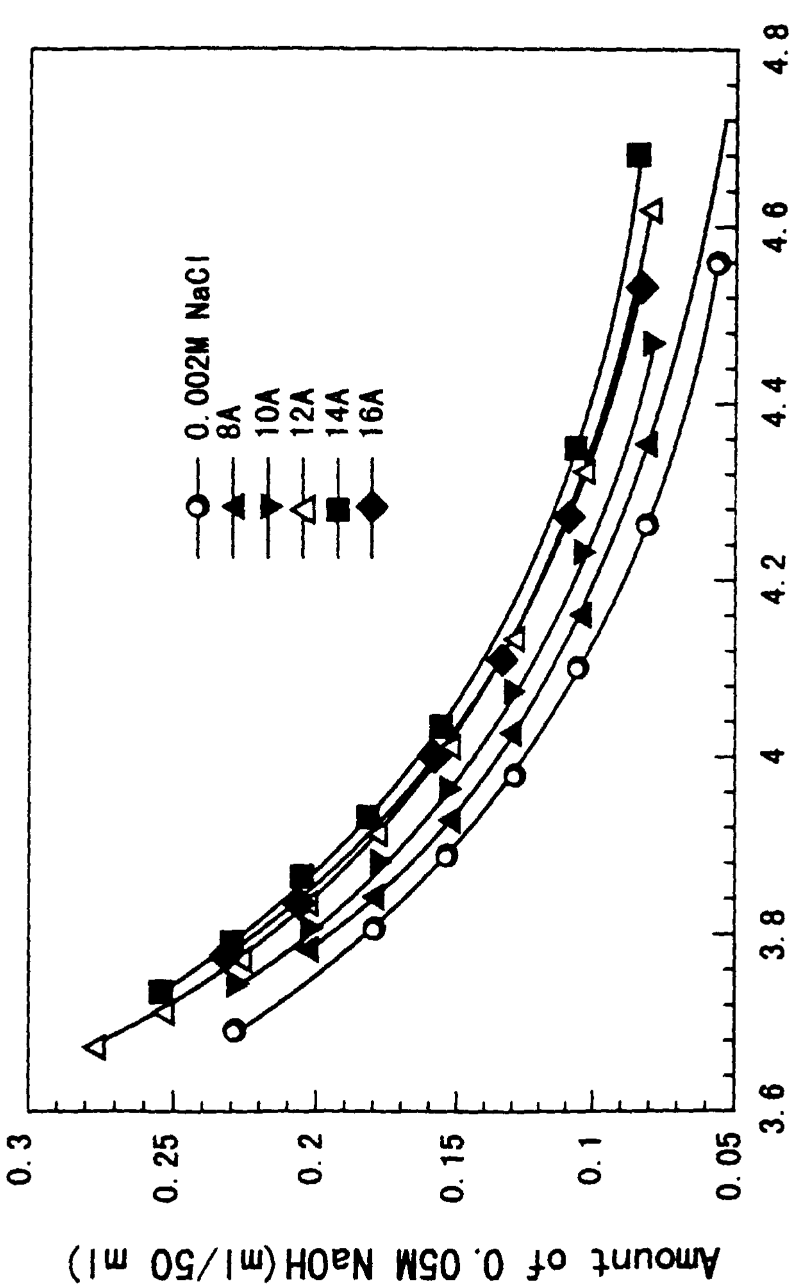

0.002M NaCl
8A
10A
12A
14A
16A
Amount of 0.05M NaOH(ml/50 ml)
0.3
0.25
0.2
0.15
0.1
0.05
pH values
3.6
3.8
4
4.2
4.4
4.6
4.8

FIG. 3

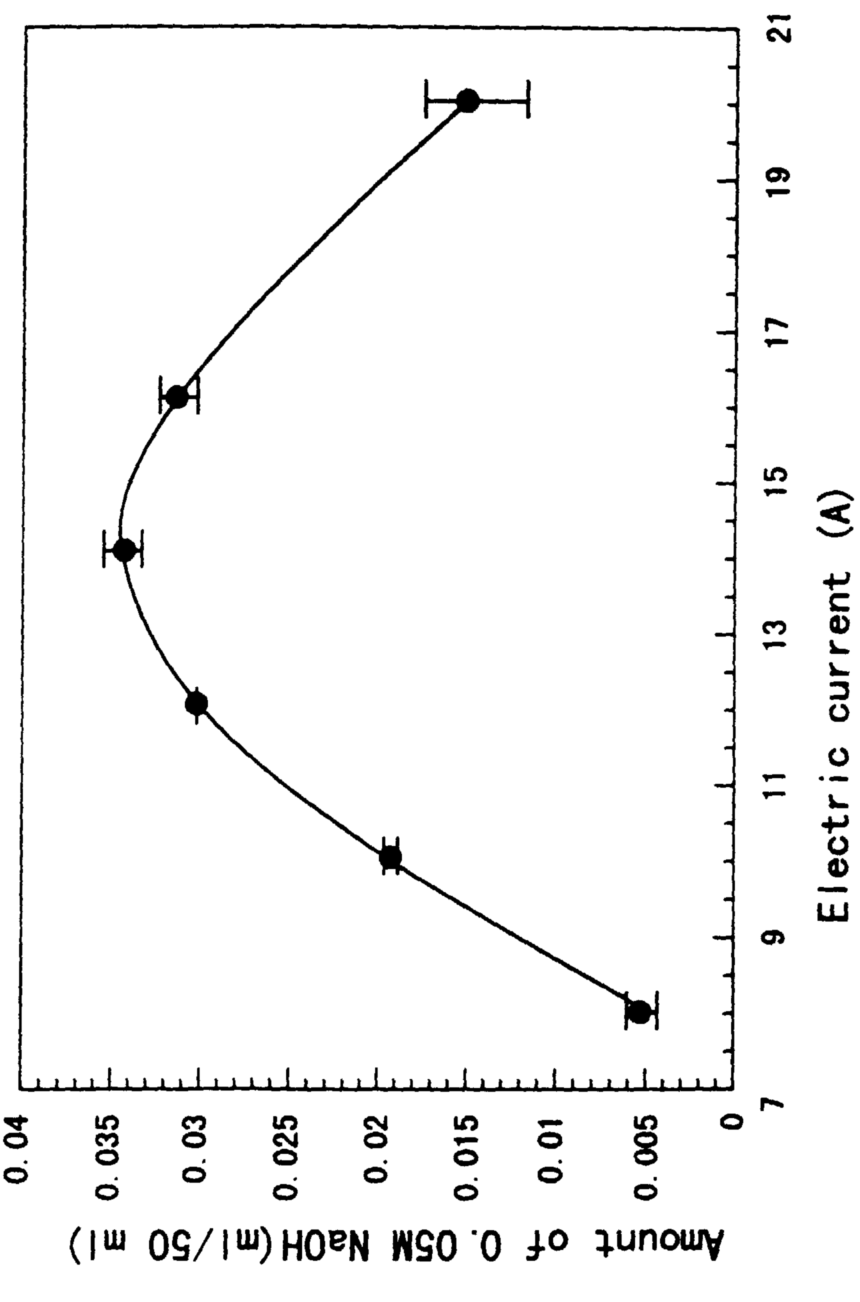
0.04
0.035
0.03
0.025
0.02
0.015
0.01
0.005
0
Amount of 0.05M NaOH(ml/50 ml)
7
9
11
13
15
17
19
21
Electric current (A)

FIG. 4

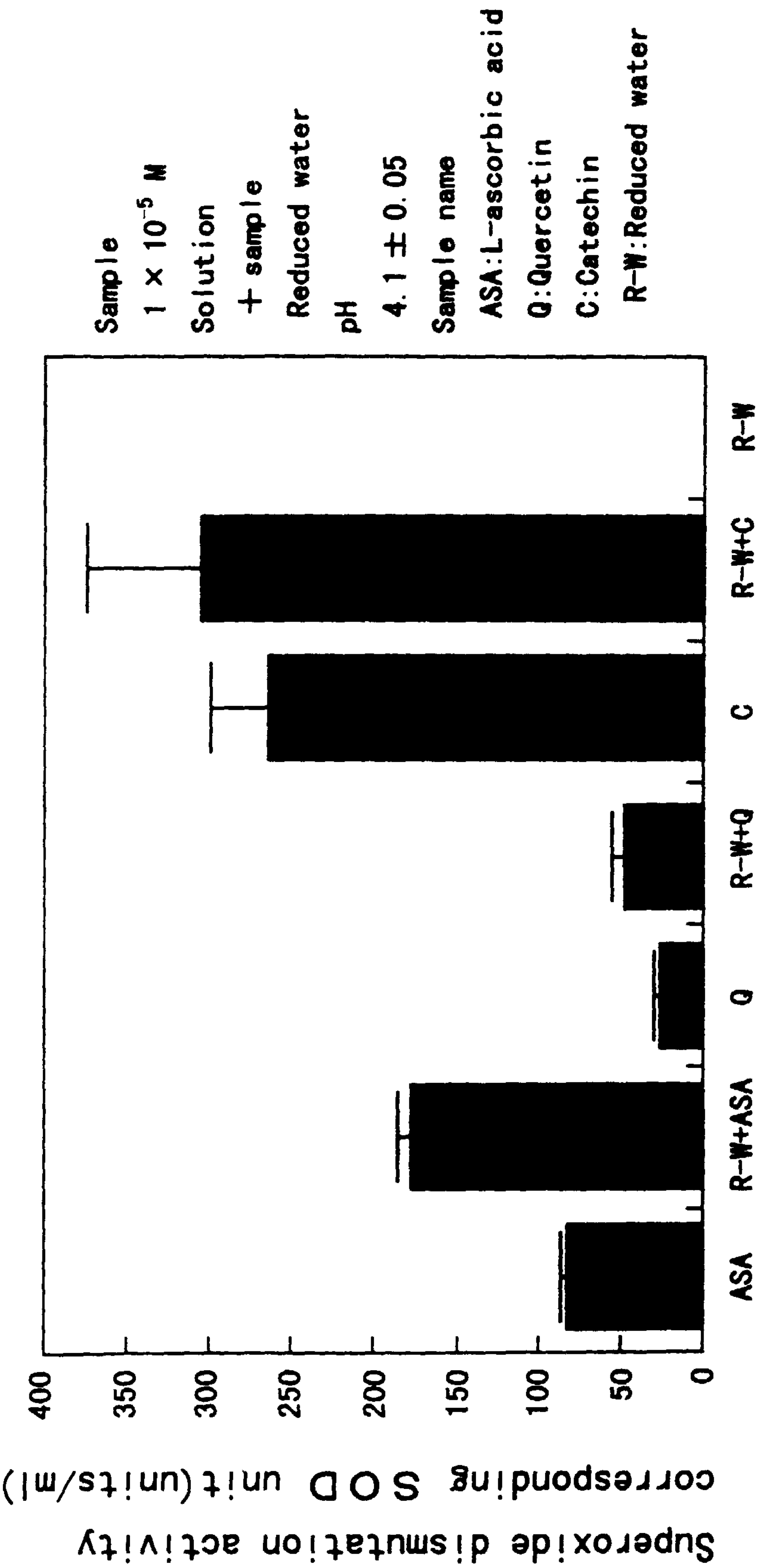
Superoxide dismutation activity
corresponding SOD unit(units/ml)
0
50
100
150
200
250
300
350
400
ASA
R-W+ASA
Q
R-W+Q
C
R-W+C
R-W
Sample
$1 \times 10^{-5}$ M
Solution
+ sample
Reduced water
pH
$4.1 \pm 0.05$
Sample name
ASA:L-ascorbic acid
Q:Quercetin
C:Catechin
R-W:Reduced water

FIG. 5

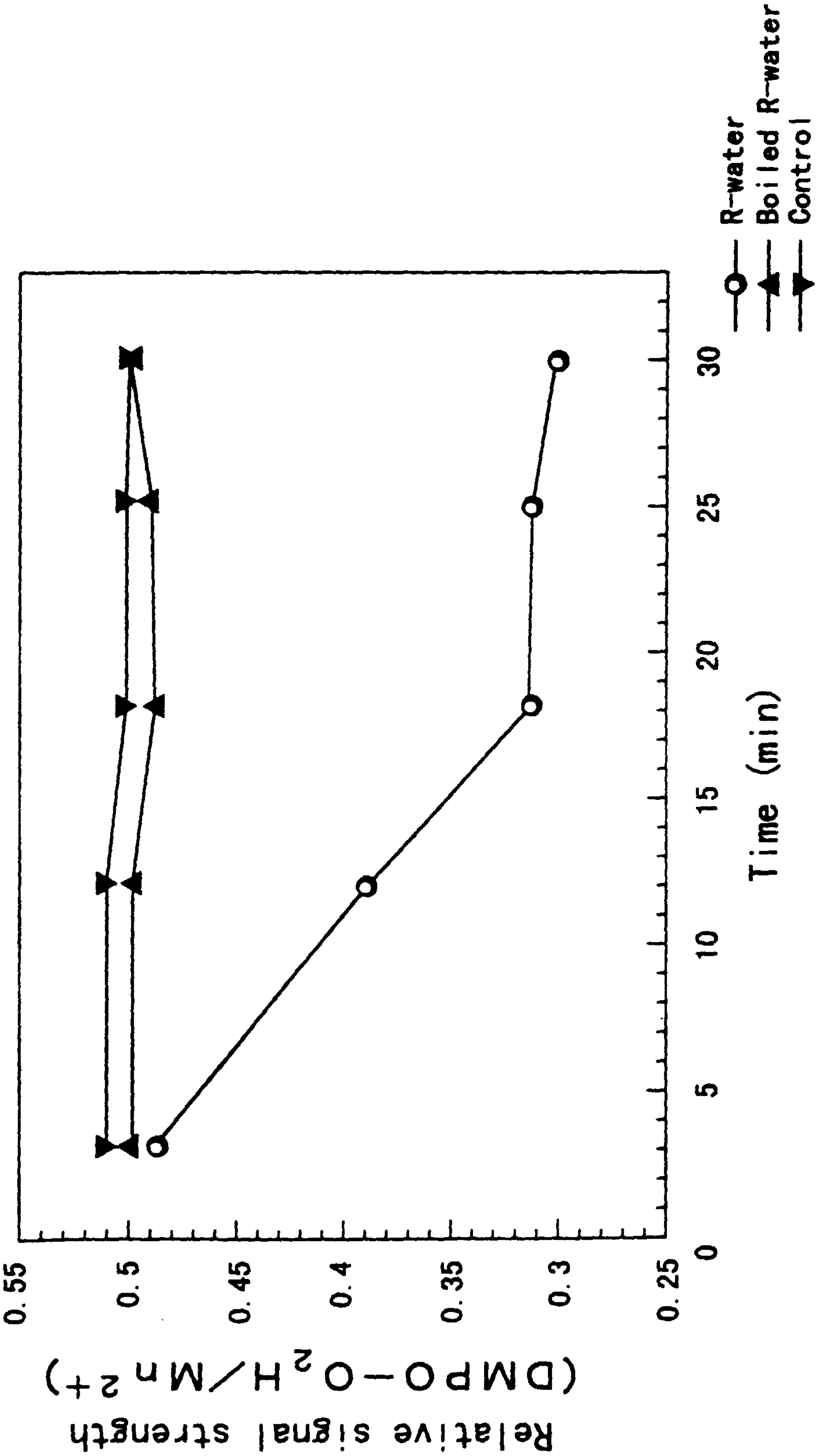
Relative signal strength
(DMPO−O2H/Mn 2+)
0.55
0.5
0.45
0.4
0.35
0.3
0.25
0
5
10
15
20
25
30
Time (min)
R−water
Boiled R−water
Control